# EUROPÄISCHE PATENTSCHRIFT

(11) **EP 1 159 929 B1**
(45) Veröffentlichungstag und Bekanntmachung des Hinweises auf die Patenterteilung: **15.06.2005**
(21) Anmeldenummer: 01112466.6
(22) Anmeldetag: 22.05.2001
(51) Int. Cl.: A61C 3/025

(54) **Dentales Abrasivstrahlgerät**
Dental abrasive blasting apparatus
Appareil dentaire à jet abrasif

(30) Priorität: 30.05.2000 DE 10026718
(43) Veröffentlichungstag der Anmeldung: 05.12.2001
(73) Patentinhaber: Ferton Holding SA, 2800 Delémont (CH)
(72) Erfinder: Beerstecher, Lutz, Dipl.-Ing., 12770 Borex (CH); Wittmann, Jörg, Dr., 64285 Darmstadt (DE)
(74) Vertreter: Müller, Frank Peter, Dipl.-Ing.

(56) Entgegenhaltungen:
- EP-A- 0 097 288
- US-A- 4 522 597
- US-A- 5 120 219

## Beschreibung

Die Erfindung bezieht sich auf ein dentales Abrasivstrahlgerät, bei welchem an eine Düsenanordnung eines an das Gerät angeschlossenen Handstückes ein in einem Pulverbehälter des Gerätes bevorratetes Dentalpulver gemeinsam mit einem gasförmigen Trägermedium und ein Fluid, das zur Vermischung mit dem Dentalpulver im Gemisch mit dem Trägermedium vorgesehen ist, über zwei getrennte Anschlußleitungen unter Druck angeliefert werden.

Bei einem aus der EP-A-0 097 288 B1 bekannten Abrasivstrahlgerät dieser Art ist der Pulverbehälter innerhalb des Gerätes untergebracht und weist eine Anschlußverbindung an eine Druckluftleitung auf, die durch den Behälter hindurch an eine zu der Düsenanordnung des Handstückes führende Pulver-Anschlußleitung angeschlossen ist. Bei der Zuleitung der Druckluft in den Pulverbehälter wird das darin bevorratete Dentalpulver in die Pulver-Anschlußleitung des Handstückes überführt, um an der Düsenanordnung gemeinsam mit normalem Leitungswasser auszutreten, welches über eine Fluid-Anschlußleitung an die Düsenanordnung angeliefert wird. In der Druckluftleitung ist stromaufwärts von dem Pulverbehälter eine Abzweigung für eine Nebenleitung vorgesehen. Diese Nebenleitung führt zu einem Quetschventil, mit welchem die Pulver-Anschlußleitung für eine Unterbrechung der Anlieferung des Luft-Pulver-Gemisches an die Düsenanordnung des Handstückes abklemmbar ist. Die Zuleitung der Druckluft an das Quetschventil wird mit einem solenoidgesteuerten Schaltventil der Nebenleitung gesteuert. Ein weiteres solenoidgesteuertes Schaltventil ist stromaufwärts von der Abzweigung der Nebenleitung angeordnet. Die beiden Schaltventile sind derart gesteuert, daß bei einer Unterbrechung der Druckluftzufuhr an den Pulverbehälter auch die Druckluftzufuhr an das Quetschventil unterbrochen ist und daher die Pulver-Anschlußleitung an die Düsenanordnung des Handstückes abgeklemmt wird.

Aus der EP-A-0 268 948 B1 ist eine Verschlußeinrichtung für einen Fluidbehälter bekannt. Die Verschlußeinrichtung ist für eine Verschraubung des Fluidbehälters mit einem Aufsatzteil ausgebildet, welches außen an einem Dentalgerät vorgesehen ist. Der Fluidbehälter erhält dadurch eine auswechselbare Anordnung an dem Gerät.

Aus der EP 0 395 557 B1 ist ein dentales Abrasivstrahlgerät bekannt, das zu einer in einem tragbaren Koffer untergebrachten autonomen Einheit zusammengebaut ist. In dem Koffer ist ein Druckluft liefernder Kompressor angeordnet, der die Druckluft über ein Dreiwegeventil wahlweise an zwei Behälter anliefert, in denen ein Dentalpulver und eine Flüssigkeit bevorratet sind. In Abhängigkeit von der Schaltposition des Dreiwegeventils können so entweder das Luft-Pulver-Gemisch gemeinsam mit der Flüssigkeit oder nur die Flüssigkeit an eine über zwei getrennte Anschlußleitungen angeschlossene Düsenanordnung eines Handstückes angeliefert werden. Für die in dem einen Behälter bevorratete Flüssigkeit ist die Verwendung entweder von normalem oder destilliertem Wasser angegeben oder auch die Verwendung einer wässrigen Lösung eines antiseptischen oder medikamentösen Mittels.

Der Erfindung liegt die Aufgabe zugrunde, ein dentales Abrasivstrahlgerät bereit zu stellen, bei welchem die Zahnbehandlung für eine erweiterte Anwendung des Gerätes außer mit dem normal verwendeten Leitungswasser auch mit einem anderen Fluid durchgeführt werden kann.

Diese Aufgabe wird bei einem dentalen Abrasivstrahlgerät der durch den Oberbegriff des Patentanspruches 1 angegebenen Art erfindungsgemäß mit den kennzeichnenden Merkmalen des Patentanspruches 1 gelöst.

Bei dem erfindungsgemäßen Abrasivstrahlgerät ist somit eine einfache Vorkehrung dafür getroffen, daß anstelle einer mit dem Gerät wie herkömmlich mit normalem Leitungswasser durchgeführten Pulverbestrahlung der Zahnoberflächen für eine Entfernung von Zahnbelägen und Zahnverfärbungen, zum Polieren oder auch nur zum Reinigen der Zahnoberflächen oder auch generell für eine Prophylaxebehandlung der Zähne die Zahnoberflächen jetzt alternativ auch mit einem anderen Fluid besprüht werden können.

Durch die auswechselbare Anordnung eines zusätzlichen Fluidbehälters außen an dem Gerät kann nämlich bsp. entmineralisiertes Wasser als Spülflüssigkeit verwendet werden alternativ zu einer in einem anderen Behälter bevorrateten prophylaktischen Mundspüllösung, die antimikrobielle bzw. bakteriostatische und zu einer Remineralisierung der Zähne beitragende Wirkstoffe mit einem Anteil enthält, der für den menschlichen Organismus nicht toxisch wirkt. Die prophylaktische Mundspüllösung kann in weiteren Austauschbehältern unterschiedlich zusammengesetzt sein. Es ist daher möglich, mit einer solchen zusätzlichen Spülflüssigkeit die Pulverbestrahlung der Zähne für eine ergänzende Prophylaxebehandlung in beliebig wählbarer Weise zu unterstützen.

Weitere vorteilhafte und zweckmäßige Ausbildungen des erfindungsgemäßen Abrasivstrahlgerätes sind mit den einzelnen Patentansprüchen angegeben.

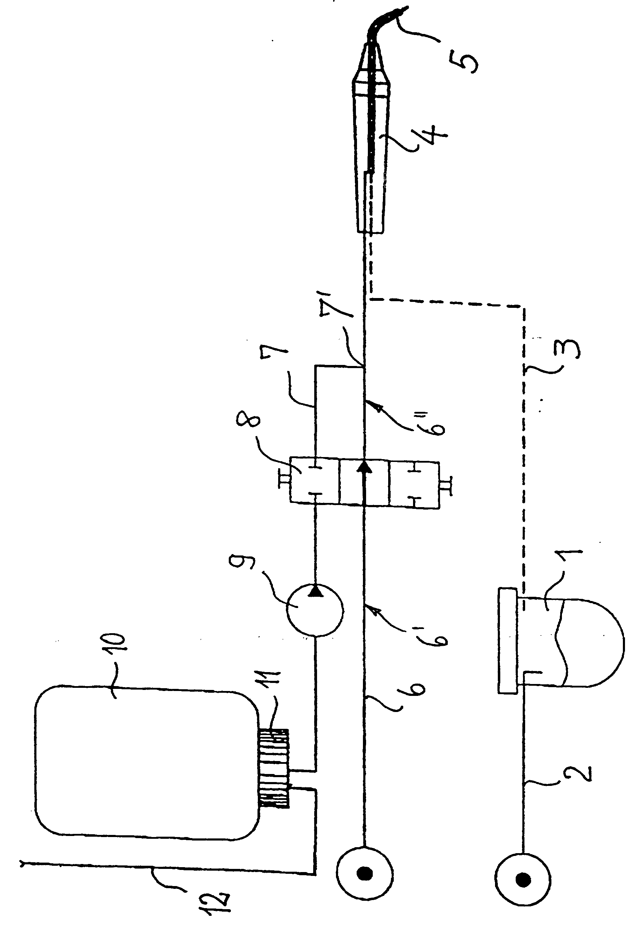

Ein Ausführungsbeispiel des erfindungsgemäßen Abrasivstrahlgerätes ist in der Zeichnung mit einer Schemadarstellung gezeigt.

Das erfindungsgemäße Abrasivstrahlgerät kann prinzipiell eine gleiche Ausbildung aufweisen wie das Gerät gemäß der EP-A-0 097 288 B1. Diese Druckschrift bildet für die vorliegende Erfindung den nächstgelegenen Stand der Technik und kann daher zur Ergänzung der Beschreibung des Ausführungsbeispieles berücksichtigt werden.

Für eine mit dem Gerät normal durchgeführte Pulverbestrahlung wird ein Dentalpulver verwendet, welches in einem Pulverbehälter 1 bevorratet ist und bsp. aus Natriumbicarbonat besteht. Das in dem Pulverbehälter 1 enthaltene Dentalpulver wird durch Druckluft, die über eine angeschlossene Druckluftleitung 2 zugeführt wird, aus dem Pulverbehälter 1 in eine Pulver-Anschlußleitung 3 eines Handstükkes 4 überführt, das eine Düsenanordnung 5 an einer Behandlungsspitze des Handstückes 4 aufweist. An die Düsenanordnung 5 des Handstückes 4 wird daneben über eine getrennte Fluid-Anschlußleitung 6 normales Leitungswasser angeliefert, welches bei der Pulverbestrahlung gemeinsam mit dem über die Pulver-Anschlußleitung 3 angelieferten Luft-Pulver-Gemisch aus der Düsenanordnung 5 austritt. Mit einer Ausrichtung der Behandlungsspitze des Handstückes 4 gegen die Zahnoberflächen kann so mit einem Pulverstrahl eine Entfernung von Zahnbelägen und Zahnverfärbungen oder auch ein Polieren oder eine bloße Reinigung bzw. generell eine Prophylaxebehandlung der Zähne vorgenommen werden. Das für diese Pulverbestrahlung normal verwendete Leitungswasser erfüllt dabei den Zweck, ein unkontrolliertes Versprühen des Pulvers während der Zahnbehandlung zu verhindern und die im Mund des Patienten verbleibenden Pulverteilchen abzuschwämmen.

Das in dem Pulverbehälter 1 bevorratete Pulver kann alternativ zu dem Natriumcarbonat auch aus Aluminiumoxid oder Dolomit bestehen, wenn mit dem Handstück weniger schonende Schneidarbeiten oder auch die Entfernung von besonders hartnäckigen Zahnsteinen durchgeführt werden sollen. Das Dentalpulver kann daneben auch einen bestimmten Anteil an Wirkstoffen enthalten, um so für eine Pulverbestrahlung bsp. eine karieshemmende Wirkung sicherzustellen. Die Beimischung anderer Stoffe zu dem Pulver ist ebenfalls denkbar.

An die Fluid-Anschlußleitung 6 ist bei dem erfindungsgemäßen Abrasivstrahlgerät eine Nebenleitung 7 angeschlossen. Der Anschluß wird über ein umschaltbares und bsp. solenoidgesteuertes Wegeventil 8 erhalten, das stromaufwärts von einer Anschlußverzweigung 7' der Nebenleitung 7 angeordnet ist. Mit dem Wegeventil 8 kann die Fluid-Anschlußleitung 6 in einem stromaufwärts von dem Wegeventil 8 befindlichen Abschnitt 6'unterbrochen werden. Das Wegeventil 8 ist dann in eine Schaltposition eingestellt, in welcher die Nebenleitung 7 über die Anschlußverzweigung 7' an den zu der Düsenanordnung 5 des Handstückes 4 führenden Abschnitt 6" der Fluid-Anschlußleitung 6 angeschlossen ist.

In der Nebenleitung 7 ist stromaufwärts von dem Wegeventil 8 eine Saugpumpe 9 angeordnet. Die Saugpumpe 9 ist über die Nebenleitung 7 an einen separaten Fluidbehälter 10 angeschlossen, in welchem eine zusätzliche Spülflüssigkeit enthalten ist. Für den Anschluß der Nebenleitung 7 an den Fluidbehälter 10 kann bsp. eine Verschlußeinrichtung 11 einer Ausbildung gemäß der EP-A-0 268 948 B1 vorgesehen sein, um für den Fluidbehälter 10 eine einfach auswechselbare Anordnung außen an dem Gerät bereit zu stellen, wenn dafür an dem Gerät noch ein entsprechendes, für eine Verschraubung mit dem Fluidbehälter ausgebildetes Aufsatzteil (nicht dargestellt) vorgesehen ist.

Die Saugpumpe 9 ist für ein Absaugen der in dem Fluidbehälter 10 enthaltenen Spülflüssigkeit vorgesehen. Die Spülflüssigkeit kann daher bei eingeschalteter Saugpumpe 8 über die Nebenleitung 7 an die Düsenanordnung 5 des Handstückes 4 angeliefert werden, sobald das Wegeventil 8 in die Schaltposition eingestellt wird, in welcher es den stromaufwärts befindlichen Abschnitt 6' der Fluid-Anschlußleitung 6 unterbricht. Um das Absaugen der Spülflüssigkeit nicht zu behindern, kann an die Verschlußeinrichtung 11 noch ein Belüftungsanschluß 12 über ein Belüftungsventil (nicht dargestellt) der Verschlußeinrichtung des Fluidbehälters 10 angeschlossen sein.

Bei ausgeschalteter Saugpumpe 9 ist andererseits das Wegeventil 8 in eine Schaltposition eingestellt, in welcher keine Verbindung des Fluidbehälters 10 mit der Dusenanordnung 5 des Handstückes 4 besteht.

Bei der in dem Fluidbehälter 10 bevorrateten Spülflüssigkeit kann es sich bsp. um bevorzugt entmineralisiertes Wasser handeln, welches im Anschluß an eine Pulverbestrahlung für ein abschließendes Reinigen der behandelten Zahnflächen über die Düsenanordnung 5 des Handstückes 4 zum Versprühen gebracht wird.

Die Spülflüssigkeit sollte bevorzugt eine prophylaktische Mundspüllösung sein, die antimikrobielle bzw. bakteriostatische und zu einer Remineralisierung der Zähne beitragende Wirkstoffe mit einem Anteil enthält, der für den menschlichen Organismus nicht toxisch ist. Bei der Spülflüssigkeit kann es sich dabei auch um die Suspension eines Dentalpulvers handeln, welches solche Wirkstoffe enthält.

Als mögliche Wirkstoffe, die für eine Beimischung zu einem Basispulver auch auf einem Trägerstoff befindlich sein können, kommen Wirkstoffe in Betracht, die aus der Gruppe der quarternären Ammoniumverbindungen, wie Cetylpyridiniumchlorid und Benzalkoniumchloride, ausgewählt sind.

Die Wirkstoffe können alternativ oder zusätzlich auch ausgewählt sein aus der Gruppe, bestehend aus den Salzen der Bisguanidine, wie Chlorhexidin und seiner Salze, der Bispyridine, wie Octenidinhydrochlorid, und der speziellen Aminsalze, nämlich Octapinol und Delmopinol.

Alternativ oder zusätzlich können die Wirkstoffe auch ausgewählt sein aus der Gruppe der Pflanzenextrakte, wie Kamille, Nelke, Salbei, Myrrhe, Ratanhia, Sanguinarin, Pfefferminz, Thymian, Menthol, und Allantoin.

Weitere zur Verfügung stehende Wirkstoffe, die zumindest bakteriostatisch wirken, sind Sauerstoff freisetzende Verbindungen, bestehend aus Peroxiden, Percarbonaten, Perboraten, Percarboamiden, Peroxomonosulfaten und Peroxodisulfaten. Auch Metallionen, wie Strontium und Zinn, sowie die Ionen der Übergangsmetalle, wie Kupfer und Zink, können als Wirkstoffe in Betracht kommen. Ebenso geeignet ist die Gruppe der Phenole und der Polyphenole. Daneben können der Spülflüssigkeit auch noch Geschmackstoffe zugesetzt sein.

## Patentansprüche

1. Dentales Abrasivstrahlgerät, bei welchem an eine Düsenanordnung (5) eines an das Gerät angeschlossenen Handstückes (4) ein in einem Pulverbehälter (1) bevorratetes Dentalpulver gemeinsam mit einem gasförmigen Trägermedium und ein Fluid, das zur Vermischung mit dem Dentalpulver im Gemisch mit dem Trägermedium vorgesehen ist, über zwei getrennte Anschlußleitungen (3,6) unter Druck angeliefert werden, **dadurch gekennzeichnet, daß**
- ein separater Fluidbehälter (10) außen an dem Gerät auswechselbar angeordnet ist, der eine zusätzliche Spülflüssigkeit bevorratet, die zur wahlweisen Anlieferung an die Düsenanordnung (5) des Handstückes (4) getrennt von oder gemeinsam mit der Anlieferung des Dentalpulvers im Gemisch mit dem Trägermedium vorgesehen ist,
- eine Nebenleitung (7) der Fluid-Anschlußleitung (6) über ein Wegeventil (8) an den separaten Fluidbehälter (10) anschließbar ist, wobei das Wegeventil (8) wahlweise in eine Schaltposition umschaltbar ist, in welcher die zusätzliche Spülflüssigkeit über eine stromabwärts von dem Wegeventil (8) vorgesehene Anschlußverzweigung (7') der Nebenleitung (7) an den zu der Düsenanordnung (5) des Handstückes (4) führenden Abschnitt der Fluid-Anschlußleitung (6) angeliefert wird,
- eine Saugpumpe (9) in der Nebenleitung (7) stromaufwärts von dem Wegeventil (8) angeordnet ist, die bei einer Umschaltung des Wegeventils (8) in die Schaltposition eingestellt wird, in welcher die Spülflüssigkeit für eine Anlieferung an die Düsenanordnung (5) des Handstückes (4) aus dem Fluidbehälter (10) abgesaugt wird.

2. Dentales Abrasivstrahlgerät nach Anspruch 1, bei welchem der separate Fluidbehälter eine Verschlußeinrichtung aufweist, die für eine Verschraubung mit einem außen an dem Gerät vorgesehenen Aufsatzteil ausgebildet ist.

3. Dentales Abrasivstrahlgerät nach Anspruch 2, bei welchem der separate Fluidbehälter über die Verschlußeinrichtung an einen Belüftungsanschluß angeschlossen ist.

4. Dentales Abrasivstrahlgerät nach einem der Ansprüche 1 bis 3, bei welchem der separate Fluidbehälter mit Wasser, insbesondere entmineralisiertem Wasser, gefüllt ist.

5. Dentales Abrasivstrahlgerät nach einem der Ansprüche 1 bis 3, bei welchem der separate Fluidbehälter mit einer prophylaktischen Mundspüllösung gefüllt ist, die antimikrobielle bzw. bakteriostatische und zu einer Remineralisierung der Zähne beitragende Wirkstoffe mit einem Anteil enthält, der für den menschlichen Organismus nicht toxisch wirkt, wobei die Wirkstoffe ausgewählt sind
- aus der Gruppe der quarternären Ammoniumverbindungen; und/ oder
- aus der Gruppe, bestehend aus den Salzen der Bisguanidine, wie Chlorhexidin und seiner Salze, der Bispyridine, wie Octenidinhydrochlorid, und der speziellen Aminsalze, nämlich Octapinol und Delmopinol; und/ oder
- aus der Gruppe der Pflanzenextrakte, wie Kamille, Salbei, Myrrhe, Ratanhia, Nelke, Sanguinarin, Fenchel, Pfefferminz, Thymian, Menthol und Allantoin;
- aus der Gruppe der Metallionen, wie Strontium und Zinn, und der lonen der Übergangsmetalle, wie Kupfer und Zink;
- aus der Gruppe der Sauerstoff freisetzenden Verbindungen, bestehend aus Peroxiden, Percarbonaten, Perboraten, Percarboamiden, Peroxomonosulfaten und Peroxodisulfaten;
- aus der Gruppe der Phenole und Polyphenole, wie Thymol und Triclosan.

6. Dentales Abrasivstrahlgerät nach Anspruch 5, bei welchem die prophylaktische Mundspüllösung 0.01 bis 5.0 Gew.-% Chlorhexidin und 0.01 bis 5.0 Gew.-% Aminfluorid enthält.

7. Dentales Abrasivstrahlgerät nach Anspruch 5, **dadurch gekennzeichnet, daß** die prophylaktische Mundspüllösung 0.01 bis 3.0 Gew.-% Natriumchlorid, 0.01 bis 2.5 Gew.-% Kaliumsulfat, 0.01 bis 5.0 Gew.-% Kaliumnitrat und 0.01 bis 5.0 Gew.-% Natriumbicarbonat enthält, im Gemisch mit essentiellen Ölen und mit Pflanzenextrakten.

8. Dentales Abrasivstrahlgerät nach einem der Ansprüche 1 bis 3, bei welchem der separate Fluidbehälter mit der Suspension eines Dentalpulvers gefüllt ist, welches antimikrobielle bzw. bakteriostatische und zu einer Remineralisierung der Zähne beitragende Wirkstoffe mit einem Anteil enthält, der für den menschlichen Organismus nicht toxisch wirkt.

9. Dentales Abrasivstrahlgerät nach Anspruch 8, bei welchem die Suspension mit Natriumbicarbonat oder mit Hydroxylapatit als Basispulver gebildet ist.

## Claims

1. A dental abrasive blasting apparatus in which a dental powder, being stored in a powder receptacle (1), together with a gaseous carrier medium and a fluid, being provided to be mixed with the dental powder in mixture with the carrier medium, are fed under pressure, via two separate connecting lines (3, 6), to a nozzle arrangement (5) of a hand piece (4) being connected to said apparatus, **characterized in that**
- a separate fluid receptacle (10) is interchangeably provided outside on the apparatus, said receptacle storing an additional rinsing liquid being provided for optional delivery to the nozzle arrangement (5) of the hand piece (4), separate from or together with the delivery of the dental powder in mixture with the carrier medium;
- a secondary line (7) of the fluid connecting line (6) is connectable to the separate fluid receptacle (10) via a directional valve (8), wherein said directional valve (8) may optionally be switched to a switch position in which the additional rinsing liquid is fed via a connecting branch (7') of the secondary line (7), positioned downstream of the directional valve (8), to the section of the fluid connecting line (6) leading to the nozzle arrangement (5) of the hand piece (4);
- a suction pump (9) is provided in the secondary line (7) upstream of the directional valve (8), wherein upon switching of the directional valve (8), said suction pump is set to the switch position in which the rinsing liquid is sucked from the fluid receptacle (10) for delivery to the nozzle arrangement (5) of the hand piece (4).

2. A dental abrasive blasting apparatus according to claim 1 in which the separate fluid receptacle is provided with a closure member designed to be screwed with a cap element provided outside on the apparatus.

3. A dental abrasive blasting apparatus according to claim 2 in which the separate fluid receptacle is connected via the closure member to a ventilation connection.

4. A dental abrasive blasting apparatus according to any one of claims 1 to 3 in which the separate fluid receptacle is filled with water, in particular demineralized water.

5. A dental abrasive blasting apparatus according to any one of claims 1 to 3 in which the separate fluid receptacle is filled with a prophylactic mouth rinsing solution containing antimicrobial or bacteriostatic agents and agents contributing to the remineralization of the teeth at a ratio being not toxic to the human organism, wherein the agents are selected from
- the group of quaternary ammonium compounds; and/or
- the group consisting of the salts of the bisguanidines, like chlorohexidine and its salts, the bispyridines, like octenidine hydrochloride, and the special amino salts, namely octapinole and delmopinole; and/or
- the group of plant extracts, such as chamomile, sage, myrrh, ratanhia, carnation, sanguinarine, fennel, mint, thyme, menthol and allantoin;
- the group of metal-ions, such as strontium and tin, and the ions of the transition metals, like copper and zinc;
- the group of the oxygen-releasing compounds consisting of peroxides, percarbonates, perborates, percarboamides, peroxomonosulfates and peroxodisulfates;
- the group of phenols and polyphenoles, such as thymol and triclosane.

6. A dental abrasive blasting apparatus according to claim 5 in which the prophylactic mouth rinsing solution contains 0.01 to 5.0 % by weight of chlorohexidine and 0.01 to 5.0 % by weight of amino-fluoride.

7. A dental abrasive blasting apparatus according to claim 5, **characterized in that** the prophylactic mouth rinsing solution contains 0.01 to 3.0 % by weight of sodium chloride, 0.01 to 2.5 % by weight of potassium sulfate, 0.01 to 5.0 % by weight of potassium nitrate and 0.01 to 5.0 % by weight of sodium bicarbonate, in mixture with essential oils and with plant extracts.

8. A dental abrasive blasting apparatus according to any one of claims 1 to 3 in which the separate fluid receptacle is filled with the suspension of a dental powder containing antimicrobial or bacteriostatic agents and agents contributing to the remineralization of the teeth at a ratio being not toxic to the human organism.

9. A dental abrasive blasting apparatus according to claim 8 in which the suspension is formed with sodium bicarbonate or with hydroxylapatite as basic powder.

## Revendications

1. Appareil dentaire à faisceau abrasif où une poudre dentaire emmagasinée dans un réservoir à poudre en même temps qu'un médium de base gazeux et qu'un fluide qui sert au mélange avec la poudre dentaire dans un agglomérat avec le médium de base, se livrent sous pression à un dispositif d'injecteurs (5) d'une poignée (4) raccordée à l'appareil, par le biais de deux conduites de raccordement séparées, ce qui est **caractérisé par le fait que**
- un récipient (10) séparé à fluide est disposé à l'extérieur de l'appareil et peut se changer; il emmagasine un liquide supplémentaire de rinçage qui est soit séparé pour la livraison au dispositif (5) d'injecteurs situé dans la poignée (4) soit est prévu en commun avec la livraison de la poudre dentaire dans le mélange voulu avec le médium de base.
- une conduite annexe (7) de la conduite de raccordement (6) du fluide peut se raccorder par le biais d'un distributeur (8) au récipient (10) séparé du fluide, le distributeur (8) pouvant se brancher au choix en position de connexion où le liquide supplémentaire de rinçage se livre par le biais d'une ramification (7') de raccords prévue en aval du distributeur (8) quant à la conduite annexe (7) vers la section de la conduite (5) de raccord du fluide conduisant au dispositif (5) d'injecteurs situé dans la poignée.
- une pompe d'aspiration (9) est placée dans la conduite annexe (7) en amont du distributeur (8) et qui se règle en position de connexion à la commutation du distributeur (8), position dans laquelle le liquide de rinçage est sorti par aspiration du récipient à fluide (10) pour une livraison au dispositif d'injecteurs (5) de la poignée (4).

2. L'appareil dentaire à faisceau abrasif selon la prétention 1 où le récipient séparé à fluide accuse un dispositif d'obturation qui est conçu pour un vissage avec une pièce rapportée prévue à l'extérieur de l'appareil.

3. L'appareil dentaire à faisceau abrasif selon la prétention 2 où le récipient séparé à fluide est raccordé à un branchement d'aération par le biais d'un dispositif d'obturation.

4. L'appareil dentaire à faisceau abrasif selon l'une des prétentions 1 à 3 où le récipient séparé à fluide est rempli d'eau, surtout de l'eau déminéralisée.

5. L'appareil dentaire à faisceau abrasif selon l'une des prétentions 1 à 3 où le récipient séparé à fluide est rempli d'une solution prophylactique pour bains de bouche et qui contient des agents antimicrobiens ou bactériostatiques contribuant à une reminéralisation des dents par une part qui n'a pas d'effet toxique sur l'organisme humain, les agents étant bien sélectionnés
- à partir du groupe des composés quaternaires d'ammoniac; et/ou
- à partir du groupe composé de sels de la bisguanidine, tels que la chorhexidine et ses sels, de la bispyridine telles que l'octenidinhydrochloride, et des ammoniacates tels que l'octapinole et le delmopinole; et/ou
- à partir du groupe des extraits végétaux tels que la camomille, la sauge, la myrrhe, la ratanhia, le clou de girofle, la sanguinarine, le fenouil, la menthe, le thym, le menthol et l'allantoine;
- à partir du groupe d'ions métalliques tels que le strontium et l'étain, et les ions des métaux transitoires tels que le cuivre et le zinc;
- à partir du groupe de composés libérant de l'oxygène, constitués de péroxydes, percarbonates, perborates, percarboamides, monosulfates péroxo et des disulfates péroxo;
- à partir du groupe des phénols et polyphénols tels que le thymol et le triclosane.

6. L'appareil dentaire à faisceau abrasif selon la prétention (5) où la solution prophylactique pour bains de bouche contient 0,01 à (5),0 pourcentage en poids de chlorhexidine et 0,01 à (5),0 pourcentage en poids d'aminofluoride.

7. L'appareil dentaire à faisceau abrasif selon la prétention (5) se **caractérise par le fait que** la solution prophylactique pour bains de bouche contient 0,01 à 3,0 pourcentage en poids de chlorure de sodium, 0,01 à 2,5 pourcentage en poids de sulfate de potassium, 0,01 à (5),0 pourcentage en poids de nitrate de potassium et 0,01 à (5),0 pourcentage en poids de bicarbonate de sodium, en mélange à des huiles essentielles et des extraits végétaux.

8. L'appareil dentaire à faisceau abrasif selon l'une des prétentions 1 à 3 où le récipient séparé à fluide est rempli d'une suspension d'une poudre dentaire qui contient des agents antimicrobiens ou bactériostatiques contribuant à une reminéralisation des dents par une part qui n'a pas d'effet toxique sur l'organisme humain.

9. L'appareil dentaire à faisceau abrasif selon la prétention (8) où la suspension au bicarbonate de sodium ou à l'hydroxylapatite est constitué en poudre de base.
